# EUROPEAN PATENT APPLICATION

(11) **EP 4 822 513 A1**
(43) Date of publication of application: **14.10.2026**
(21) Application number: 26170633.7
(22) Date of filing: 02.04.2026
(51) Int. Cl.: G06F 3/16, G06F 3/04883, G09B 5/06

(54) **STORY CREATOR SYSTEM AND METHOD**

(30) Priority: 08.04.2025 US 202563785532 P; 15.04.2025 US 202563789163 P; 26.09.2025 US 202563888659 P; 25.11.2025 US 202563924971 P
(71) Applicant: Crayola, LLC, Easton, PA 18040 (US)
(72) Inventor: WEISS, Stephen Nicholas, Easton, PA (US)
(74) Representative: Murgitroyd & Company

(57) **Abstract**

An electronic device is provided that includes an ability to receive input via a base unit. The base unit can be sized to receive a piece of paper to draw a drawing on. The input can be indicated to be received by the tip of a person's finger, imitating a recording of live, custom audio associated with the drawing at a specific location, facilitated by the use of a conductive switch matrix. The audio recordings can be communicated to a receiving device to be paired with photographs and shared with others.

## Description

### CROSS-REFERENCE TO RELATED APPLICATIONS

This application is related to and claims the benefit of (1) U.S. Provisional Application having serial number 63/785,532 (filed on April 8, 2025 and entitled "STORY CREATOR SYSTEM AND METHOD"); (2) U.S. Provisional Application having serial number 63/789,163 (filed on April 15, 2025 and entitled "STORY CREATOR SYSTEM AND METHOD); (3) U.S. Provisional Application having serial number 63/888,659 (filed on September 26, 2025 and entitled "STORY CREATOR SYSTEM AND METHOD); and (4) U.S. Provisional Application having serial number 63/924,971 (November 25, 2025 and entitled "STORY CREATOR SYSTEM AND METHOD"). All of the aforementioned patent applications are incorporated by reference herein.

### BACKGROUND

A child's imagination is unbounded. Spared from yet learning the constraints and physical limitations of the real world, children are free to draw, color, and create pictures limited only by the resources at hand. Although visual pictures provide some level of creative development, that level can be enhanced by allowing drawings to be enriched with audio. Prior attempts to incorporate audio into drawings rely on prohibitively expensive technologies or limit a child's imagination by allowing only limited selections of pre-recorded audio. The state of the art could be enhanced by providing an electronic device that intuitively allows incorporation of audio into stand-alone drawings with components that simplify user input and distinguish between intentional, localized pressure actions and unintentional blunt actions (noise).

### BRIEF DESCRIPTION OF THE DRAWINGS

The present disclosure is described in detail below with reference to the accompanied drawing figures, wherein:
FIGs. 1A and 1B depict illustrative electronic devices in accordance with embodiments of the disclosed technology.
FIGs. 2A-2F depict aspects of an illustrative switch matrix in accordance with embodiments of the disclosed technology.
FIG. 3 depicts an aerial view of another illustrative embodiment of the disclosed technology.
FIGs. 4A-4C depict other illustrative embodiments of a base unit.
FIG. 5 depicts communicating information from a base unit to a computing device in accordance with an embodiment of the disclosed technology.
FIGs. 6A-6i depict other illustrative embodiments of a system in accordance with the instant disclosure.
FIG. 7 depicts an alternative matrix detection option suitable for practicing an embodiment of the disclosed technology.

### DETAILED DESCRIPTION

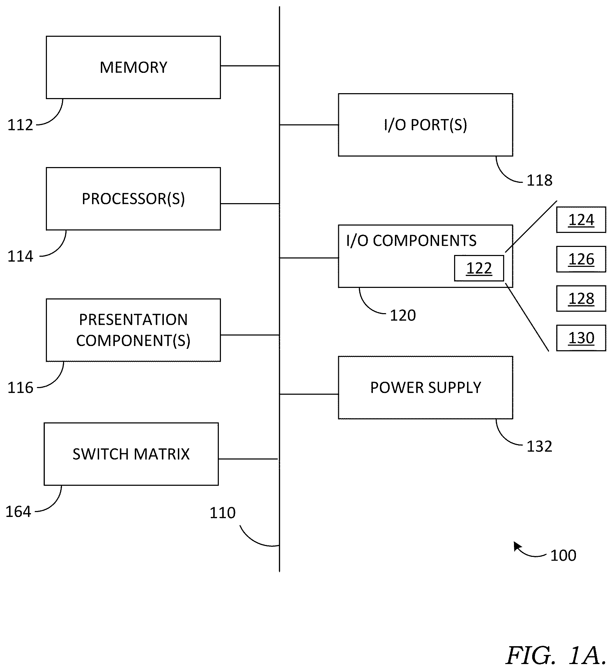

With reference to FIG. 1A, an electronic device 100 may include a variety of computer-readable media. Computer-readable media may be any available media that can be accessed by electronic device 100. It can include both volatile and nonvolatile media, removable and non-removable media. By way of example, and not limitation, computer-readable media may include computer-storage media and communication media. Computer-storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, such as optical-storage components or any other medium which can be used to store desired information and which can be accessed by electronic device 100. Computer storage media does not include signals per se. Communication media typically embodies computer-readable instructions, data structures, program modules, or other data in a modulated data signal such as a carrier wave or other transport mechanism and includes any information delivery media. By way of example, communication media includes wired media, such as a wired network or direct-wired connection, and wireless media, such as acoustic, RF, infrared, NFC, Bluetooth, and other wireless media. Combinations of any of the above should also be included within the scope of computer-readable media.

Memory 112 includes computer-storage media in the form of volatile and/or nonvolatile memory. The memory may be removable, non-removable, or a combination thereof. Exemplary hardware devices include solid-state memory, hard drives, optical, etc. The computer-storage media can be non-transitory and/or embody non-transitory computer-executable instructions. Electronic device 100 includes one or more processors 114 that read data from various components such as memory 112. Electronic device 100 may also send or receive information to or from input/output ("I/O") components 120. An illustrative I/O component includes a wand 122, which can include other I/O components such as a microphone 124, speaker 126, and an LED 128, and button controls 130. Presentation component(s) 116 can present data indications to a user or other device. Exemplary presentation components include a display device, including a projector, speaker, printing component, vibrating/tactile-feedback component, presentation component, user interface, and/or the like.

I/O ports 118 allow electronic device 100 to be logically coupled to other devices, including I/O components 120, some of which may be built in, including situated in a base or tethered component, as explained in greater detail below. Illustrative components that could be communicated with or from include a microphone, joystick, game pad, scanner, printer, wireless communication device, etc. The I/O components 120 may provide a natural user interface (NUI) that processes gestures, voice, or other physiological inputs generated by a user, for example, a user touching, motioning, or indicating selections. In some instances, inputs may be transmitted to an appropriate network element for further processing. Electronic device 100 may be complemented by depth cameras, such as stereoscopic camera systems, acoustic, infrared camera systems, RGB camera systems, RF-interference detection, or the like, and/or a combination of these for gesture detection and recognition. Additionally, electronic device 100 may operate in conjunction with scanners (such as IR scanners), accelerometers or gyroscopes that enable detection of motion.

Power supply 132 can be batteries, a real-time source such as a power from an electrical outlet, or similar.

Switch matrix 164 will be described in more detail below. In one embodiment, it is a conductive switch matrix. It is a specialty hardware component that enables a detection of a force applied at a location (e.g., an X-Y coordinate) of the matrix by sensing a change in resistance at that location, enabling the location of the applied force to also be determined.

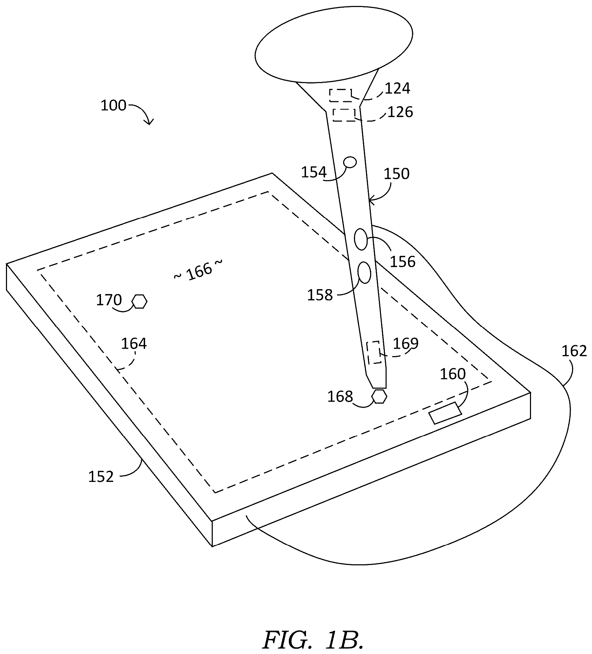

Aspects of the disclosed technology may take on a variety of physical forms. FIG. 1B indicates but one illustrative form. There, where like numerals refer to like items from FIG. 1A, an embodiment of the disclosure technology includes a wand 150 and a base 152. In one embodiment, wand 150 is an elongated member that includes an LED indicator 128, a first button 156, a second button 158, a microphone 124, and a speaker a 126A. In this embodiment, it is characterized by a flute shape that is conducive to collecting custom audio and playing back audio. In some embodiments, some of the wand components may be situated in base 152. Base 152 can include one or more controls (physical or electronic drawing-identification control), illustratively numbered 160. Control 160 can be used to identify a drawing (and could perform additional or alternative functions as well). For example, drawing-identification control 160 could include a plurality of positions, such as a first, second, and third, where each position corresponds to a piece of paper 166. The memory of the positions can be cleared and reset. Alternatively, drawing-identification control 160 could be a keypad that is useable to identify drawings.

In other embodiments, paper 166 can is encoded with a unique identifier such as a barcode or QR code. Wand 150 can further include a scanner that is useable to scan the unique identifier, thereby enabling Electronic device 100 to identify a drawing and its stored audio and locations.

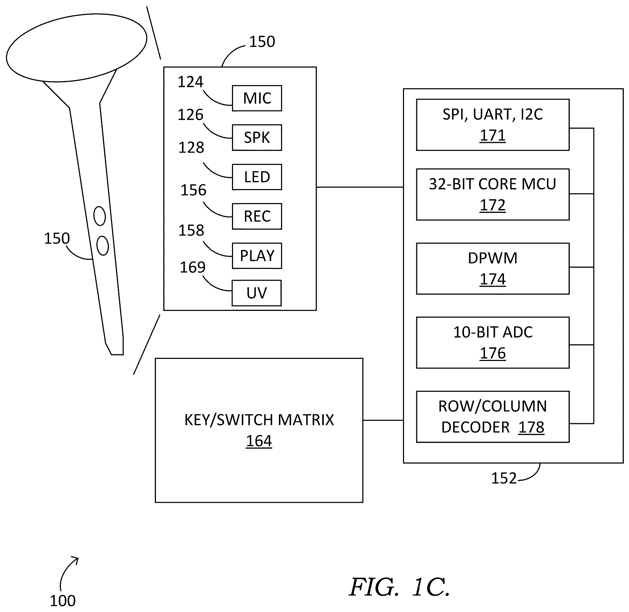

FIG. 1C depicts other or additional aspects of electronic device 100. Wand 150 is pictured along with several integrated devices in one embodiment. Microphone 124 receives real-time audio from a user. It can send data to an analog-to-digital converter (ADC) 176 to convert analog voice to digital signals and be stored via instructions with a microcontroller unit (MCU) 172. Various lower-level connections between wand 150, base 152, and each's subcomponents are not shown in detail. The subcomponents may be interconnected via one or more busses (not all of which are shown).

Speaker 126 outputs audio. In some embodiments, its functionality is complemented by a digital pulse width modulation (DPWM) component 174.

LED 128 can provide visual cues to users. For example, it can illuminate when in a certain mode, such as a recording mode. It can blink to convey other messages, such as lack of recorded audio at a given location.

Recording butting 156 can be used to place device 100 into a recording mode that enables it to record live, real-time audio, which can be from a user or other source (but still live). "Play" button 158 can be used to place device 100 into an audio playback mode. Buttons 156 and 158 could take on other forms, such that of a rocker switch or soft key. In one embodiment, they are coupled to MCU 172, which in turn, is coupled to other components.

A UV or IR (infrared) light 169 provides a source of specialized light (such as UR or IR) to be emitted by wand 150.

MCU 172 (or other processors) process various protocols and interfaces, indicated by box 171. These can include, for example, a Serial Peripheral Interface (SPI), Universal Asynchronous Receiver/Transmitter (UART), or Inter-Integrated Circuit (I2C).

Conductive-switch matrix 164 will be described in greater detail below. Returning to FIG. 1B, wand 150 may be coupled to base 152 by connection 162. Connection 162 could be a wired or wireless connection (such as Bluetooth, infrared, or similar). In one embodiment, base 152 is sized to intuitively receive a piece of standard 8.5" x 11" paper (or similar sizes, such as A4). Thus, in one embodiment, it is about 11 or so inches long by about 15 or so inches wide.

Conductive switch matrix 164 is shown with broken lines because in one embodiment it is situated just below a touch-friendly top surface of base 152 that passes touch (e.g., localized instances of pressure) through to switch matrix 164. In operation, in one embodiment, a piece of paper 166 is situated atop the surface. The paper may be temporarily affixed to base 152 in a variety of ways, such as by clips (not show), recessed grooves, light adhesive, and the like.

In operation, device 100 provides a way for users to record custom audio and associate it with a specific location on paper 166, which can be used by the user to draw a drawing upon for example. In one embodiment of the disclosed technology, device 100 receives input in the form of real-time audio from a user and a location to associate with that audio. In one embodiment, this is accomplished by pressing button 156 to indicate that a desired sound is to be recorded. At the same time, downward pressure is applied to wand 150 into the upper surface of base 152. That localized pressure by wand 150 causes switch matrix 166 to identify a location upon the paper 166, such as an imaginary X-Y coordinate (e.g., row-column location) upon the paper. Microphone 124 is used to receive custom, real-time audio from the user. LED 154 can be used to indicate that wand 150 is in an audio-receiving mode.

In one embodiment, an indication 168 is made on paper 166 by wand 150. Wand 150 is equipped with a marking device at its narrow end. illustrative marking devices include a stamp, marker, etc. In one embodiment, indication/mark 168 is not visible to the human eye under normal lighting conditions. It becomes visible when subject to a different light source such as ultraviolet (UV) or IR light, also known as a black light. For example, 110 can include an ink-application tip that leaves a mark on paper 166 when downward pressure is applied to it. In some embodiments, wand 150 is equipped with a UV/IR light 169 (FIG. 1C) at its narrow end to help re-locate the location of saved audio.

Mark 168 provides a way for users to identify an X-Y location of where custom sound has been recorded for playback. For example, if the recorded audio associated with mark 168 is desired to be played back, then a user can accomplish this by moving wand 150 to the X-Y location of mark 168, press downward, and press button 158. This would cause switch matrix 166 to sense the location of mark 168 though closing of a switch, whose location is known. A processor, such as MCU 172 (or other processor 114), would have associated real-time recorded audio with location 168. Button 158 being pressed while the wand is pressed into location 168 will playback the respective recorded audio by speaker 126, which, in one embodiment, is integrated with microphone 124 in wand 150.

If different audio is desired to be recorded at a different location, that this can be carried out by, for example moving wand 1502 to a different X-Y coordinate associated with paper 166. A second X-Y coordinate is marked by a second indication 170. When wand 150 is pressed into paper 166 at location 170, custom live audio is received via microphone 124 and stored in one or more memory components, as previously mentioned. The audio can be played back by pressing wand 150 into paper 166 at location 170. The audio is played through integrated speaker 126.

One of the goals of the disclosed technology is to provide device 100 in a cost effective manner to enable it to be more accessible to a wider group of users. As will be explained, the technology of a preferred embodiment stands in contrast to prior attempts to effect similar technologies. For example, past technologies include using dedicated input output devices, separate microphones and speakers, and a complex touch screen. Prior attempts suffer from a variety of drawbacks, however. For example, beyond not being commercially viable, they fail to distinguish between a desired location and what might be best described as noise from unintended instances of pressure.

For example, say a child is handling wand 150. They may rest their wrist on paper 166. Former technologies would read that pressure from the child's wrist as a location point to store audio. As will be explained in greater detail below, this deficiency has been overcome by utilizing a conductive switch matrix.

Other attempted prior-art implementations merely attempted to allow mapping prerecorded (not real-time and not live) audio to locations of a surface. But this limits a user's imagination and prevents them from recording their own sounds and types of sounds instead of a few limited discrete audio clips. Or they include costly touchscreens that could not distinguish between blunt forces (like a child's wrist) and localized forces, like the small tip end of wand 150. In one embodiment, the tip is less than about 1". In another embodiment, it is

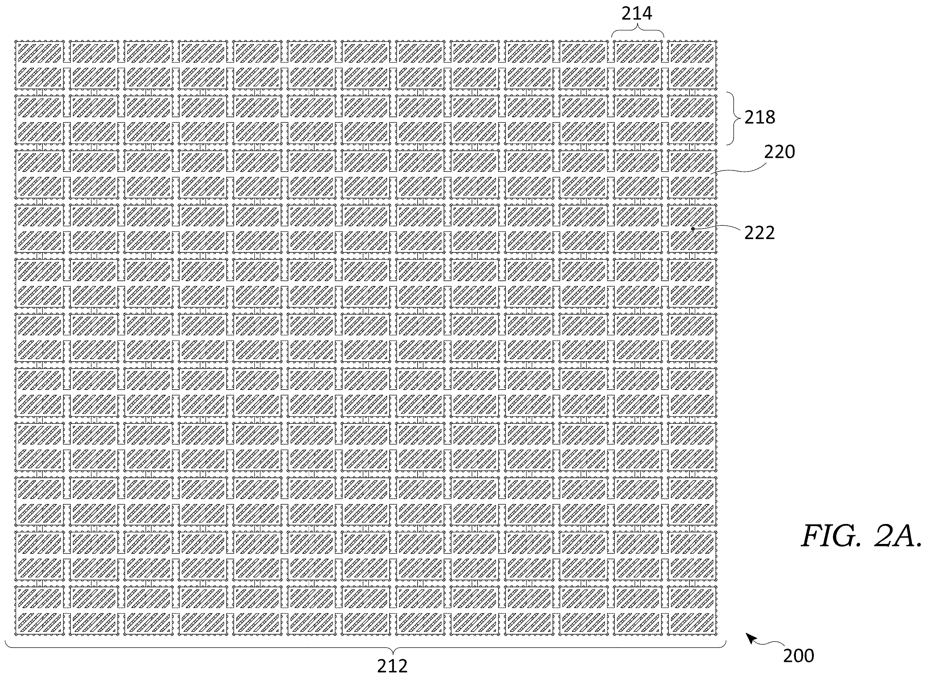

Switch matrix 164 will now be described in more detail with reference to FIGs. 2A-2E. Turning now to FIG. 2A, a top view of an upper array 200 is shown. (Note, sometimes switch matrix 164 is referred herein to as an array as well). Array 200 includes a number of rows and columns of conductors. In the illustrative depiction of FIG. 2A, thirteen (13) rows and eleven (11) columns of conductive components are shown. But those numbers should not be construed as limiting. Instead, depending on desired outcomes, more columns or rows could be included. Including more columns and rows could increase the fidelity of sensing localized pressure applications, such as pressing the narrow end of wand 150 into the top surface of Electronic device 100, thereby causing a consequential pressure to be applied to switch matrix 200.

As shown, array 200 is flat. The conductors that make it up are flat. Array 200 is flat to accommodate a thin profile of a housing of Electronic device 100. For example, the housing might be desired to be less than about two inches or so (or less).

The group of columns in array 200 is referenced by numeral 212. An illustrative column is referenced by numeral 214. An illustrative row is indicated by numeral 217. One of the squarish conductors is referenced by numeral 220. The center portion of a conductor is indicated by number 222. Array 200 could be thought of as an upper array in that is closer to the top of Electronic device 100, situated just below its top surface.

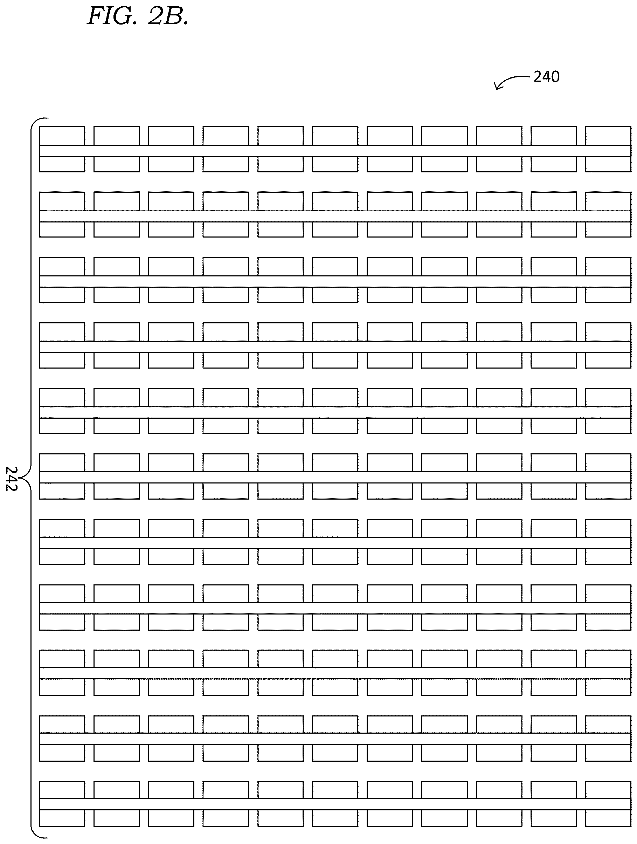

A second (or lower) array 240 is depicted in FIG. 2B. There, the squarish conductors are rotated 90 degrees with respect to the ones in the upper array 200.

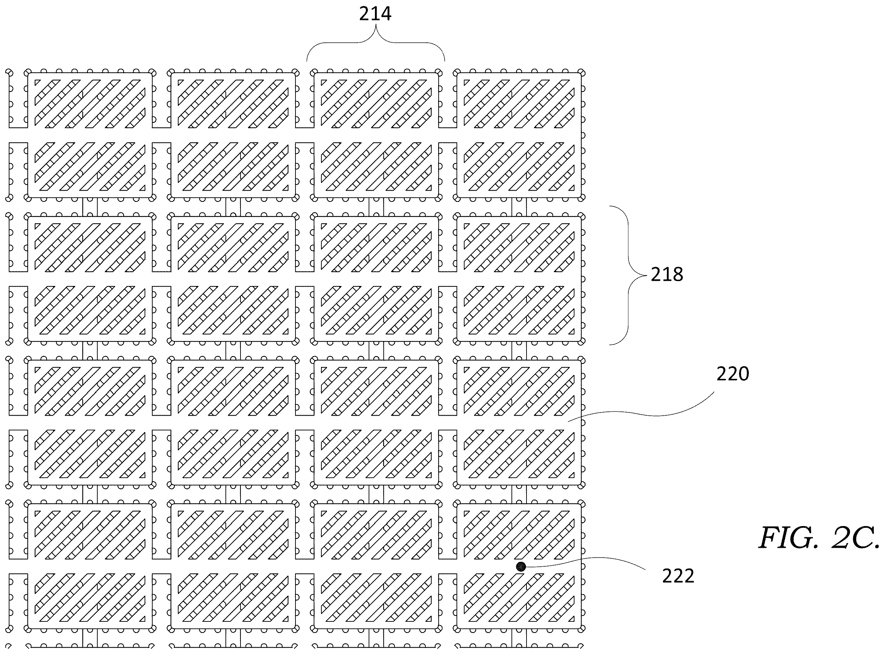

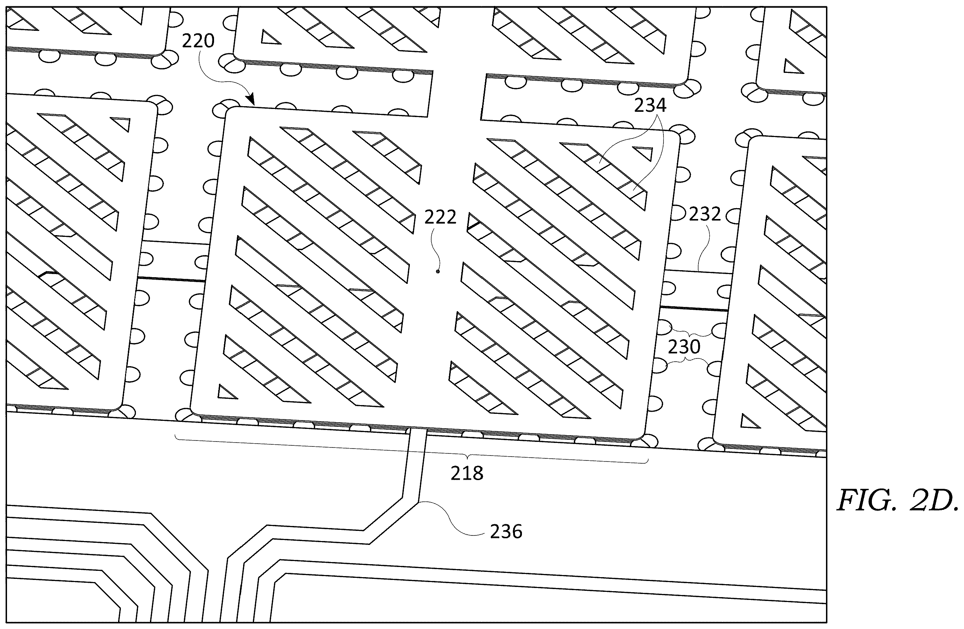

The two arrays are separated to prevent any of the conductors from touching each other while they are in a resting and default state. Separation is made by small insulators. The insulators are small circles depicted in FIG. 2A. They are more clearly seen in FIG. 2C, which is a zoomed-in view of the upper-right corner of FIG. 2A. They are still clearer in FIG. 2D.

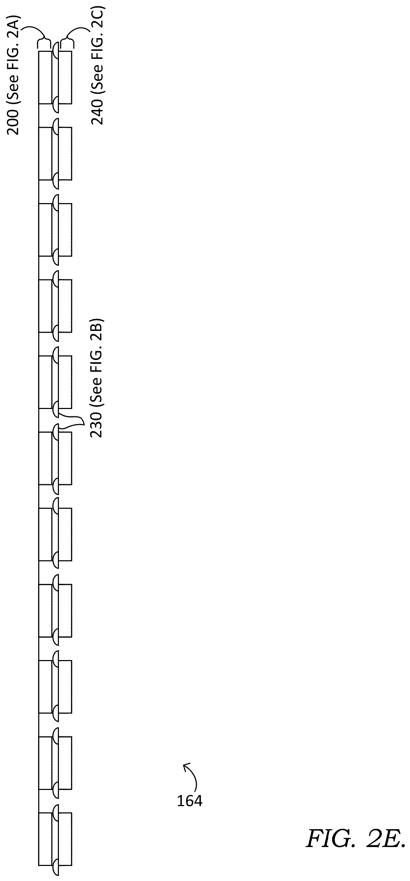

FIG. 2D is a zoomed in view of a portion of FIG. 2A. It shows an illustrative conductor 220 and portions of other conductors. The circles are the small insulators. They have height, more clearly seen in FIG. 2E. Four sample insulating standoffs are referenced by numeral 230 in FIG. 2D.

FIG. 2D shows that the upper conductors, such as 220, sit above the lower conductors, the lattices 234 of which are visible through the latices of the upper conductors. Numeral 232 shows a set of lower conductors.

When pressure is applied toward the center 222 of a conductor, it touches the corresponding lower one, completing a connection (closing a switch), and enabling a coordinate location of where the localized pressure occurred to be determined given that the location of each corresponding upper and lower conductor (switch) is known. The coordinate location of the localized pressure maps to essentially the same coordinate location of the upper surface of Electronic device 100 and consequently to the piece of paper 166 sitting atop the surface.

FIG. 2E shows a side view of switch matrix 164. It shows upper array 200 spaced away from lower array 240 by small insulating standoffs 230. In some embodiments, a row-column decoder 178 provides other aspects of being able to determine a location coordinate of a pressure application.

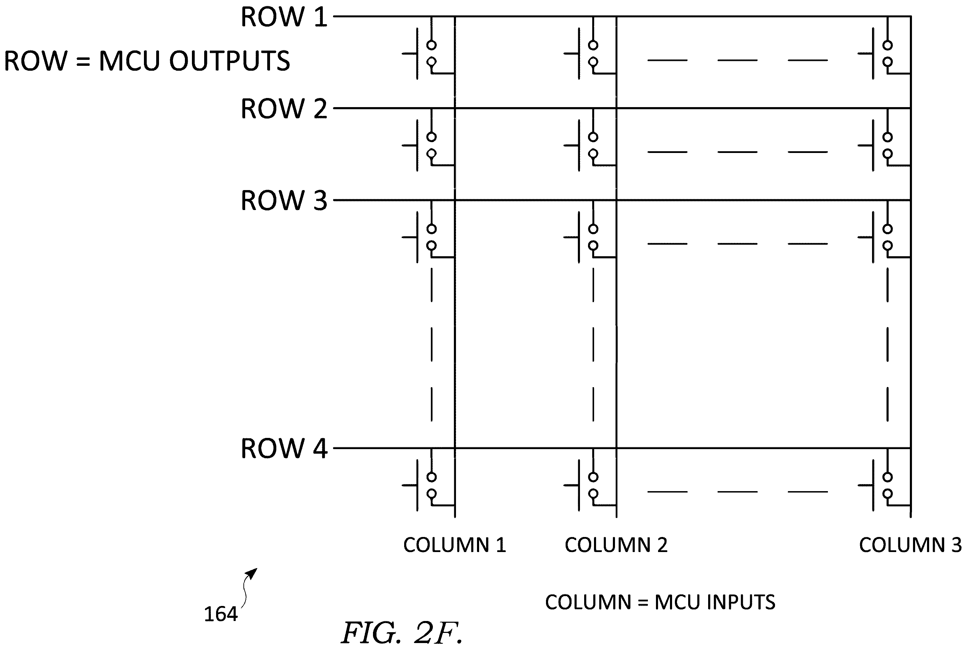

Aspects of switch matrix 164 are explained here in more detail with additional reference to FIG. 2F. Switch matrix 164 utilizes a detection scheme (row/column decoder) using a microprocessor/microcontroller (such as those shown in FIG. 1C) scanning with multi-key press and ghosting mitigation in one embodiment. FIG. 2F is simplified. For example, it omits pull-up/pull-down resistors omitted.

Key matrix 164 can include a plurality of mechanical or conductive switches arranged in an intersecting grid of row and column conductors. In one embodiment, each key switch is positioned at the junction of one row and one column line and electrically connects the corresponding lines when actuated. One or more microprocessors interface with the matrix such that a first subset of lines (e.g., rows) are configured as controllable digital outputs, and a second subset (e.g., columns) are configured as digital inputs with appropriate biasing (e.g., pull-down resistors) to ensure a defined logic level in the open-switch state in one embodiment.

Sequential Row Scanning. The microprocessor(s) perform detection by sequentially driving each row line to a logic high state while holding all other row lines low in one embodiment. For each active row, the processor reads the state of each column input. If a column input reads as logic high while a given row is active, a keypress at the corresponding intersection is inferred (and this location is known). This scanning is repeated for all rows, allowing for full matrix coverage.

Simultaneous Keypress Detection. To support multiple simultaneous keypresses (such as "n-key rollover" or NKRO), a scanning algorithm preserves all keypress detections across the entire matrix for the duration of each full scan cycle. By maintaining a buffer of active row/column pairs, the system can report multiple key actuations concurrently, provided that no interference or ambiguity arises from the matrix topology or switch behavior.

Ghosting phenomenon and mitigation. Ghosting can occur when multiple keys matrix in matrix 164 are simultaneously pressed (or switches closed), creating unintended conductive paths, leading the microprocessor to register false keypresses. For example, in a basic matrix without isolation components, the simultaneous actuation of three keys forming an "L" shape in the grid may cause the system to detect a fourth, unpressed key at the diagonal of that shape due to shared paths. To mitigate ghosting, several approaches described herein may be employed.

First, diode isolation can be used. There, each key switch may be paired with a unidirectional diode, oriented to allow current flow only from row to column or vice versa. This prevents unintended current paths and electrically isolates each keypress, enabling true n-key rollover without ghosting.

Second, firmware filtering can be employed. If diodes are not used, ghosting can be minimized by restricting key detection to specific patterns or by rejecting any scan results where more than two keys in the same row or column are pressed simultaneously-patterns known to give rise to ambiguous readings.

Third, time-domain verification can be used. Additional scanning passes with modified activation logic may be employed to verify detected keypresses and exclude false positives arising from transient or parasitic (mostly in capacitive key switch systems) paths.

Ghosting mitigation strategies may be implemented individually or in combination, depending on desired outcomes, application requirements, manufacturing constraints, and desired user experience.

This matrix scanning method, when augmented with simultaneous keypress detection and ghosting prevention mechanisms, enables robust, accurate, and efficient user input detection. It is well-suited to a compact embedded system, user interface, and facilitates reliable detection of multiple concurrent switch activations with minimal I/O-resource consumption.

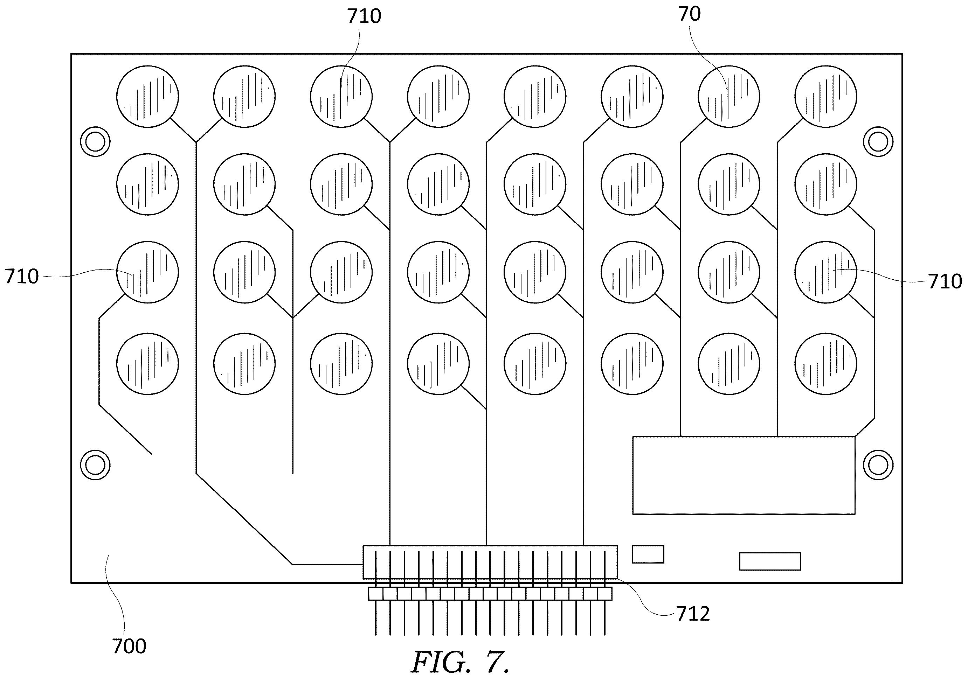

In another embodiment of the disclosed technology, as shown in FIG. 7, a detection matrix takes the form of a capacitive sensing interface may be utilized in place of a conductive switch matrix 164 to detect localized input. This capacitive interface 700 may comprise a plurality of capacitive pads 710 arranged in an X-Y pattern for example. Each capacitive pad 710 in this configuration can be electrically coupled to a unique input/output (I/O) port on a target microcontroller (such as MCU 172 ), enabling each pad 710 to be individually addressed. To optimize signal clarity and minimize interference, each capacitive pad 710-which may be circular in shape, or shaped differently-can be surrounded by a fringe-field ground plane. Furthermore, the capacitive interface may be implemented on a substrate such as an FR4 printed circuit board (PCB). In one embodiment, this PCB includes a continuous ground plane disposed across the entire back surface of the board to provide electromagnetic shielding and consistent reference levels for the capacitive sensors. This structural arrangement facilitates high-fidelity detection of localized proximity or pressure without the need for sequential row-column driving. The conductive paths shown are merely to pictorial, not intended to convey actual pathways and connections. Some are illustratively shown as couple to physical interface 712. In some embodiments more or fewer can be connected to the interface as desired. Just because some conductors are shown not connected to interface 712. This does not mean that they are actually not connected.

### Illustrative Use Cases.

Illustrative use cases and methods will now be described. As mentioned electronic device 100 is provided. In one embodiment, it includes an elongated wand 150 having a body characterized by a small end and an opposite end. Wand 150 does not have to be elongated as shown, but is merely in one embodiment. The wand includes speaker 126, a specialized light source (such as UV or IR) 169, a first input control 156, and microphone 124 coupled to a memory suitable to store live audio received in real time, such as memory 112. The specialized light source 169 is not required.

A base unit 152 is coupled to elongated wand 150 in one embodiment. It 152 has having an upper surface (below paper 166) and a flat conductive switch matrix 164 disposed below the upper surface. The conductive switch matrix 164 includes an upper flat array 200 of conductors arranged in a first matrix disposed above a lower flat array 240 of conductors arranged in second matrix. An illustrative row 218 of conductors run perpendicular to an illustrative column 214 of conductors. A set of insulators 230 (and the others not labeled) separate the upper array 200 from the lower array 240 such that no conductor of the upper array is in contact with any conductor of the lower array unless a force is applied to a conductor of the upper or lower array.

The conductive switch matrix 164 enables a location of a localized force applied to the upper surface to be determined when the localized force is applied at the location. An illustrative localized force would be that applied by the small end of wand 150. In one embodiment, the localized force would be less than about one inch, ¾", or ½".

One or more processors (114, 172) are coupled (directly or indirectly) to wand 150 and to the flat conductive switch matrix 164.

One or more non-transitory computer-storage media (which could be a portion of the one or more memory components that make up memory 112) are coupled to at least one of the one or more processors. The storage media has computer-executable instructions embodied on it that, when executed by one or more of the one or more processors, cause the electronic device to perform functional aspects described herein.

One functional aspect of the disclosed technology includes determining a first location of a localized pressure applied to the upper surface of Electronic device 100. That localized pressure could be exerted by a pressing down of the tip of wand 150 into paper 166, thereby passing through Electronic device 100's upper surface, and into conductive matrix 164. This would cause a connection between one set of upper and lower conductors of upper array 200 and lower array 240. Because the locations of each conductor are known, this would allow a coordinate location of the pressure application to be determined.

The illustrative process can further include receiving a first live audio in real time via the microphone. Far different from not being able to record audio, microphone 124 enables, for example, a child to record an audio segment live and in real time, and associate it with a drawing object on paper 166 at a certain location. For example, a child might draw a tree, a cow, and the sun. Each would be located a different coordinate location. She could move wand 150 to the coordinate location of the tree (e.g., location 168), apply pressure to wand 150 and press button 156 (or some other control), and speak a message, such as "cows have more than one stomach." Electronic device 100 would store that live, real-time, custom audio segment. It would also associate that first audio segment with the coordinate location of the cow and store the association. This process could be repeated with the sun (at, perhaps location 170), storing "the sun is 98 million miles away" as an audio segment incident to pressing wand 150 into the sun's location and holding down button 156 (e.g., receiving feedback from an input control, the button), or recording automatically upon pressing wand 150 into picture 166. It would also be repeated for the tree, storing "we need trees to live" and associating it with a third coordinate location.

This will enable playback of respective messages. For example, moving the wand to the location of the cow, pressing the wand into paper 166 at that location, and pressing button 158 will cause the cow-related message to be played back through the speaker 126. Similarly, pressing wand 150 into the sun's location will cause the sun-related recording to be played back. And same to retrieve the tree's message.

To help avoid the wand from being unwieldy, its length could be restricted. For example, its body might not be longer than about 14 inches in one embodiment. Or it could be fewer than about 8 inches.

The small end of the wand could be adapted to place a mark on paper 166 in some embodiments. But to avoid interfering with the picture, the mark could be made by ink that is only visible via specialized light source 169.

The physical size of Electronic device 100 could be customized to accommodate drawing on standard sheets of paper in one embodiment. Thus, the upper surface of the base of Electronic device 100 could be configured to receive a piece of paper, such as an 8.5" x 11" or A4 sheet. The upper surface could be dimensioned to be about 8.5" x 11" to make receiving the paper intuitive.

As mentioned, conductive switch matrix 164 is configured to distinguish between a localized pressure caused by an object less than about one inch in diameter (such as the tip of wand 150) and a non-localized pressure caused by an object greater than about 1.5" in diameter (such as a child's wrist resting on Electronic device 100). This is accomplished by provided the conductive switch matrix 164 as described, including its rows and columns of facing arrays of conductors spaced by insulating spacers 230.

In one embodiment, flat conductive switch matrix 164 provides a plurality of flat switches that enable a coordinate location of a pressure application to be determined when localized pressure is applied to matrix 164 (by, for example, the tip of wand 150), thereby effectively closing one of the switches by causing a normally separated upper and lower conductor to come in contact with each other. The location of each switch is known. Although FIG. 2A shows 11 rows and 13 columns, there could be more if an increase in fidelity is desired. In one embodiment, the flatness is provided by utilizing printed conductive traces on PET (Polyethylene Terephthalate or polyethylene-based) sheet.

As discussed, wand 150 need not assume the physical for illustratively show in FIG. 1B. Electronic device 100 could include a remote component 150 having a body characterized by a first end and an opposite end. The remote component can include a speaker 126, UV/IR light source 169; first input control 156, and a microphone 124 coupled to a memory suitable to store live audio received in real time, such as in memory 112.

Base unit 152 can coupled to remote component 150 via connection 162 (wired or wireless). The base unit includes a first surface such as the top surface upon which paper 166 is applied. It 152 includes flat conductive switch matrix 164 disposed below the first surface. Matrix 164 is adapted to determine a first coordinate location of where a first localized pressure is applied to the first surface.

A component of memory 112 is configured to store first live audio that is received in real time via the microphone incident to receiving an indication of the first localized pressure at the first coordinate location, such as location 168.

Computer-storage media embodies a set of computer-executable instructions that facilitate storing the first audio along with its associated first coordinate location 168 and retrieving the first audio incident to a receiving a second indication to play the first audio associated with the first coordinate location.

In another embodiment, computer-storage media store executable instructions to perform a process that includes receiving a first indication to store a first live real-time audio segment associated with a first coordinate location that corresponds to a first area of a surface of the electronic device. The first coordinate location is determinable from a first pressure action applied to the flat conductive switch matrix disposed within the body of Electronic device 100. The process also includes receiving the first audio segment live and in real time via a component that includes an integrated microphone and speaker, storing the first audio segment along with the first coordinate location such that the first audio segment is retrievable incident to a second pressure action applied at the first coordinate location, and playing the first audio in response to the second pressure action and to a second indication that indicates that the first audio segment should be played.

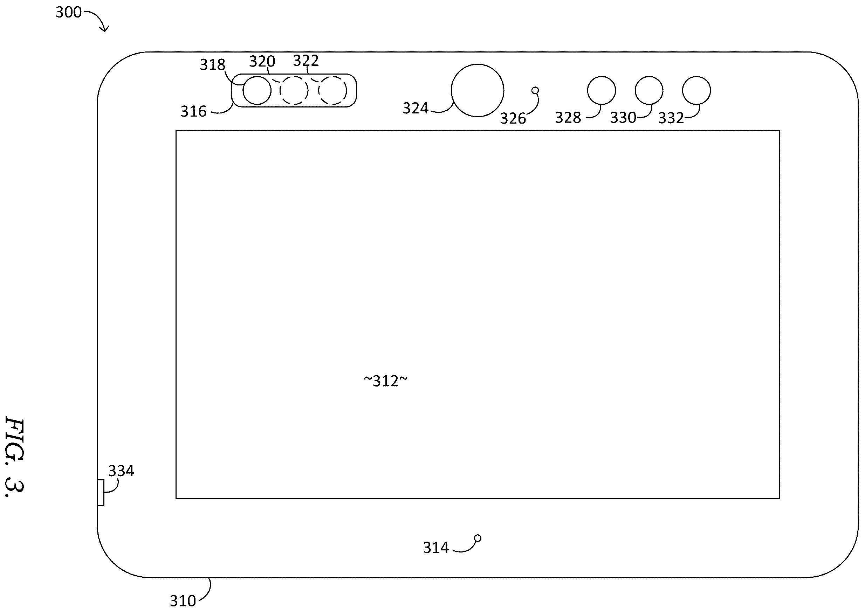

FIG. 3 depicts an aerial view of another embodiment of the disclosed technology. It includes components similar to those of FIG. 1A. But in contrast to FIG. 1B, the embodiment of FIG. 3 does not include a wand. Audio-storage (and playback) locations are identified using a human finger.

Device 300 includes a housing 310. In one embodiment, a microphone 314 enables sound recording. A control area 316 includes a slidable button 318 (or other control) that can be placed in multiple positions, such as a second position 320 or a third position 322. In one embodiment, button 318 acts a page indicator that is useable to identify a set of recordings and locations associated with page. For example, when button 318 is in the first position (the position shown, in solid lines), that would indicate a first page, e.g., a first set of recordings and locations. When button 318 is in a second location 320, that would correspond to a second set of recordings and locations of those recordings (a second page). Position 322 would indicate a third page. Several alternatives to slider area 316 are contemplated. For example, push buttons could be used, switches, and the like.

A speaker 324 is useable to play audio.

An LED 326 is useable to provide operational feedback in one embodiment. LED 326 can blink multiple colors and at multiple frequencies/rates to reduce a need for multiple LEDs.

Controls can be used to indicate recording sessions or options, playback, deletions, etc. For example, in one embodiment, button 328 is useable to enter a recording session. In some embodiments, pressing button 328 initiates a preset recording interval, such as twenty seconds, thirty, or other amount. During that internal, device 300 is in recording mode. During recording mode, device 300 recognizes a desired location to store a recording by a pressure indication, such as users pressing their finger in a location in area 312. In one embodiment, continuous pressure by the user's finger indicates that sound received by microphone 314 is to be stored and associated with the location of the finger.

Recording stops when users lift their finger in one embodiment. If the finger is lifted before the recording interval has lapsed, device 300 remains in recording mode such that another press-and-hold at a different location will store new audio at that other location. Alternatively, button 328 could be used to enter a long-term recording mode. Pressing button 328 before a recording interval has lapsed can end recording mode.

Button 330 can be used to control playback features. For example, pressing button 330 in one embodiment indicates the play mode is enabled. In that mode, pressing (e.g., by one's finger) a grid location in area 312 will playback audio associated with that grid location.

Button 332 can also be used to engage a "play all" mode. It can be used to play all audio messages associated with a given page.

Button 332 in combination with button 328 can be used to delete full-page recordings. Individual cell deletion can occur during recording by re-recording via button 328 to re-record a message at a certain cell location. A long press at a certain cell location and then pressing button 328 (or similar) could also achieve a selective delete to re-record at that cell location. Pressing multiple buttons simultaneously can, as alluded to, provide additional functionality. For example, holding down buttons 328 and 332 could erase all audio content associated with a page.

Here are some other illustrative use cases.

### Recording mode.

Recording button 328 is pressed and released. LED 326 glows red and remains on. A twenty-second timer begins. A location in area 312 is indicated by pressing and holding at a location. Recording starts. LED 326 (optionally still red) blinks faster (illustratively, three or four times per second). Timer can be reset by pressing button 328 again. Releasing a location indication or the timer lapsing can indicate that recording is to be stopped.

Press and hold another location to do more recording at a different location, LED 326 can blink faster (e.g., four times per second or similar) to so indicate. The timer can be reset if desired.

If the time times out, then button 328 can be pressed again to restart recoding mode, which would reset the timer too. LED 326 can dim when recording mode ends.

If there is no further activation, LED 326 can stay on and the same color (e.g., red) during recording-idle mode. It can end at the conclusion of second timer.

Recording timer per cell location (e.g., a single membrane switch location) can be a certain duration (such as 10 seconds).

### Playback mode.

Playback mode can take on a variety of forms. Pressing and release playback button 330 can cause LED 326 to turn green and blink slowly. This can initiate a second timer

Pressing a location to play audio could cause the LED to remain green while the audio is played. The audio is played back. When it ends, LED 326 could blink slowly.

Pressing and holding at another location in area 312 would play other the audio. LED 326 would illuminate green and remain on. Timers can be used between the various sessions.

In one embodiment, if a timer times out, a user would press and release playback button 328 to start a new playback session.

Upon no further activation, LED 326 may remain green and blinking slowly for a time during playback idle mode and would ends at the conclusion of the second timer.

Jumping back to record after play, or play after record, would lead LED 326 to follow the LED functionality per each mode as described above in one embodiment.

### Play-All mode.

Pressing and releasing a play-all button, which could be button 332, causes LED 326 to glow green, and blink slowly (e.g., once per second) if desired. Device 300 plays back all the audio on a page in the order that it was recorded in one embodiment. After all audio of a page is played back, LED 326 will stop flashing and turn off.

In one embodiment, a switch 334 doubles as a power switch and volume control. For example, it can have three positions: off, low, and high.

In one embodiment, when memory resources are exhausted, device 300 will double beep at all locations in record mode.

Options to mark pages with markers can be provided with device 300. Users can mark locations where audio has been recorded if desired.

Device 300 can include an ability to detect false positives of pressure and not act on them. This functionality could include, for example, wrist rejection or otherwise include functionality to reject unintentional multiple switch activations, including during record mold. For example, if a user's wrist touches a membrane switch, and a threshold number (such as four) of cells are active (e.g., closed) at the same time, then no cell in that four-cell area is activated. But a finger can still activate the other cells for recording at the same time at a unique location.

A push anywhere within the membrane switch matrix, then a delay time by an amount, could lead to a beep sound, and the program (embodied computer executable instructions) detects which cells are activated at that time. That cell, or the other activated cells, will be associated with a given audio content during recording. And any can be used to facilitate playback.

In another example, say a left-hand finger activates two cells, then the righthand finger activates a cell at another position within a certain timeframe. There, all the cells activated by both fingers will have the same audio content during recording. And any can be used to facilitate playback.

In another example, say a left-hand finger activates two cells and then the righthand finger activates a different cell within a delay time. Then, only the two cells activated by the left hand will be associated with the stored audio content.

In another example, say a user's finger activates two adjacent cells simultaneously, and during recording, the user's finger moves to the other cell. Say the user's finger drifts from left to right. Then, each cell will be associated with the content and either would be useable to play it back.

In another example, say a user's finger initially only activates one cell adjacent to another, a left one. During recording, the user's finger moves to an adjacently right cell, deactivating the left cell while activating the right one. There, the left cell will store the first portion of the recording. The right cell will be associated with the latter portion.

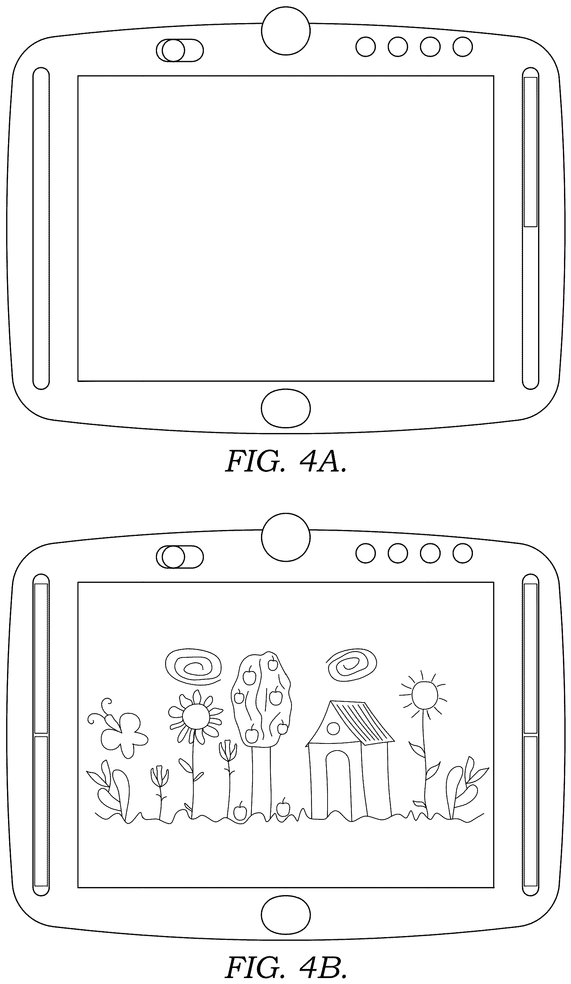

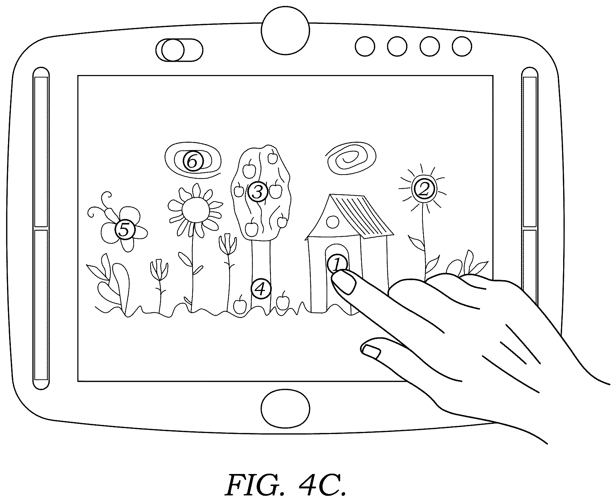

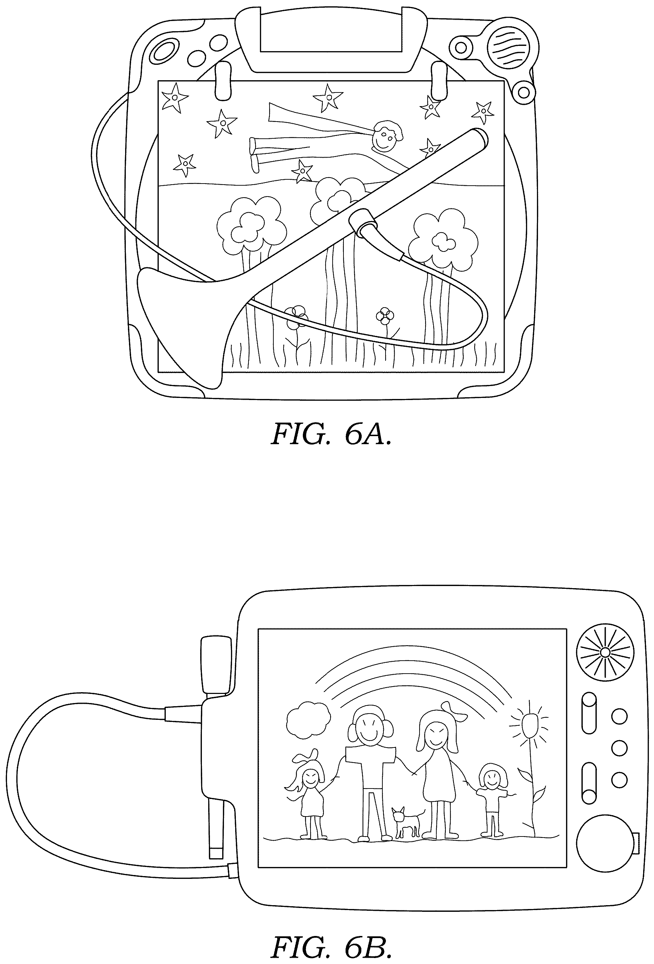

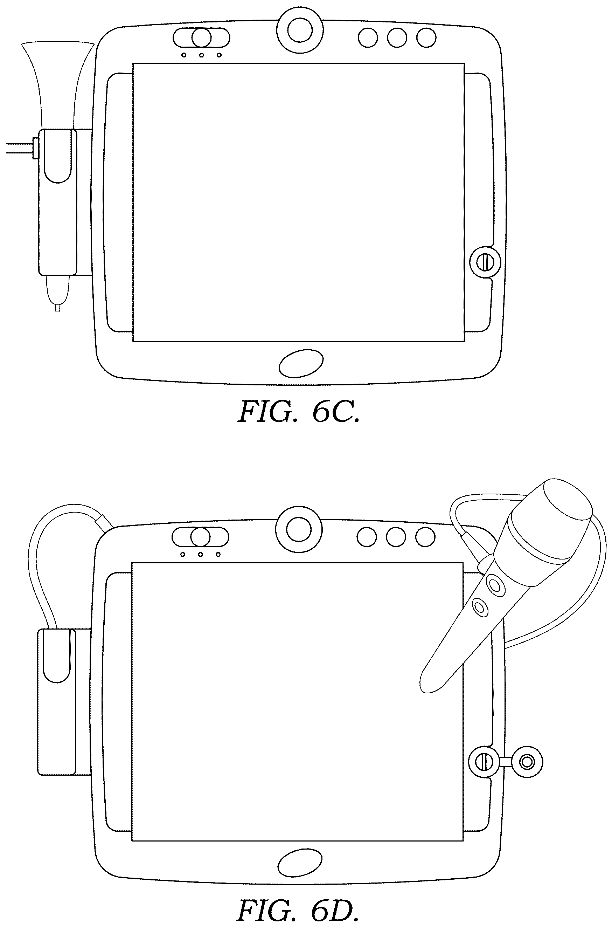

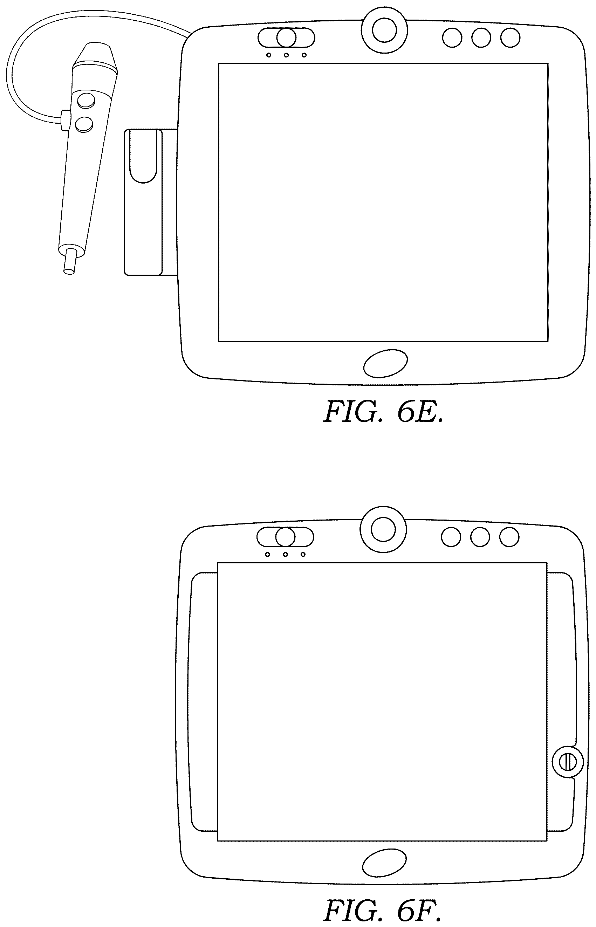

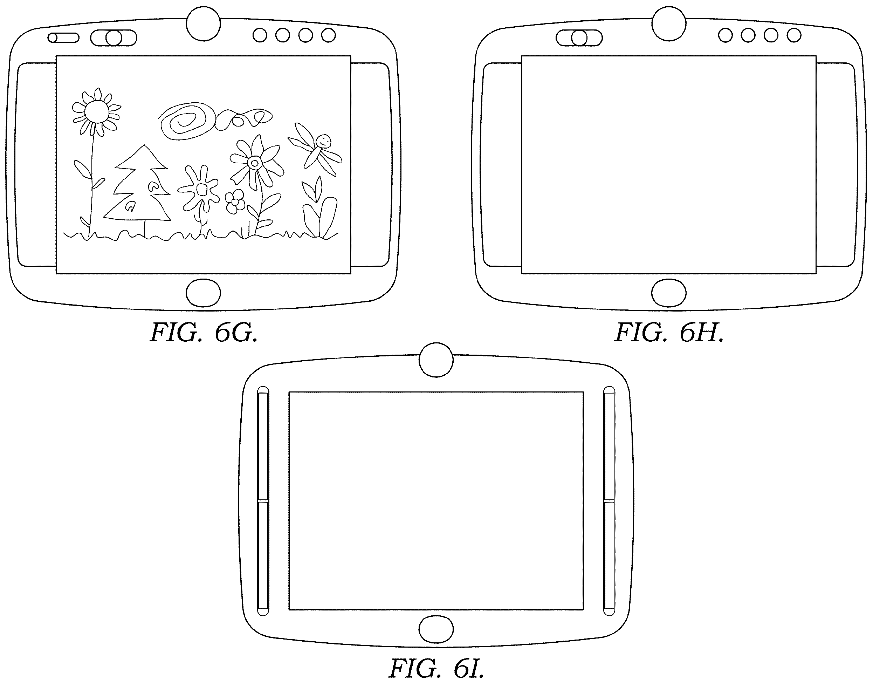

Still other embodiments are the illustrative base units are provided in FIGs. 4A-4C as well as 6A-6i. In some embodiments, pressing a record button places the base station in record mode. Then, a long-finger press at a specific location in the coloring area records audio for the duration of the press (until the press is released) and associates the audio with that location. Pressing a playback button engages playback mode. Then, pressing (by a finger for example) at the same location plays back the audio that as recorded and associated with that location.

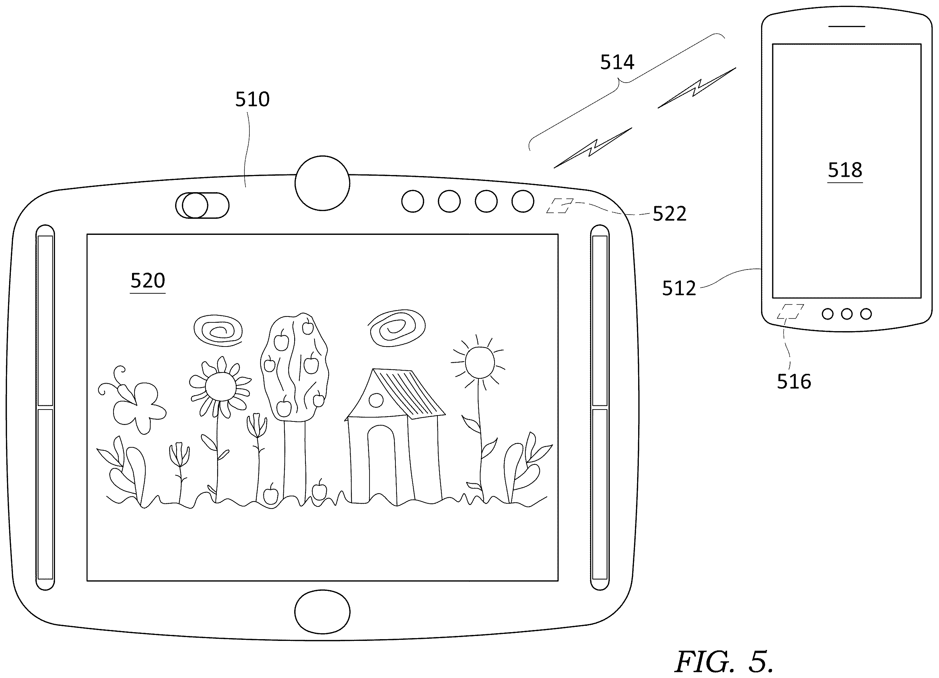

FIG. 5 depicts an illustrative embodiment where information is communicated from base 510 to a computing device 512. Information is communicated via a wireless link 514. Wireless link 514 can be of the types previously mentioned, including a Bluetooth connection or other means of communicating data wirelessly. Computing device 512 can take on a variety of forms and include the components as described in FIG. 1A. In one embodiment, computing device 512 includes a user interface 518, a camera, a speaker, and a set of computer executable instructions 516.

Instructions 516 can be stored in one or more memory components of computing device 512 (or in a remote location such as a cloud location). In one embodiment, instructions 516 make up an application that runs on computing device 512 (which can be a smartphone, tablet, etc.). Thus, the set of instructions will be variously referred to herein as application 516.

In one embodiment, user interface 518 of application 516 presents the user with an option to take a picture of the drawing on base 510. Base 510 has the capability to communicate a set of recordings associated with that picture to device 512. Thus, in one embodiment, application 516 allows a photograph of the image coloring to be paired with a corresponding set of recordings.

An illustrative example will now be provided. In this illustrative example, a user has drawn a drawing 520 and stored a set of audio recordings 522 that are respectively associated with the numbered locations on base 510. In some embodiments, users may want to share what their children have done, for example. Thus, in one example, a user, such as a child, can complete a coloring (drawing 520) which, of course, is not limited to a coloring but can be any drawing and take on a variety of forms. The user will then indicate what recordings are to be associated with what objects, which translate to locations on base 510.

The one or more audio recordings 522 can be sent to computing device 512 in a variety of ways. One embodiment, they are pushed from base 510. For example, a user can activate a control on base 522 to indicate a desire to send audio recordings 522. Application 516 can present a notification indicating that recordings 522 are to be received. In another embodiment, application 516 can pull audio recordings from base station 510.

In such an embodiment, user interface 518 may present instructions to a user to retrieve or receive recordings 522. For example, a user can indicate a desire to receive recordings 522. Application 516 would present on user Interface 518 a list of available recordings (including 522 and other recordings) that are available to be received from bass device 510. Application 516 would receive an indication from a user as to one or more recordings that are to be communicated from base device 510, and then initiate an action that would communicate recordings 522 to computing device 512 by way of wireless link 514, for example.

Application 516 could include the ability to associate any number of recordings with respective photographs of the drawings that the recordings respectively correspond to. In this way, application 516 further facilitates the ability to share a child's (or other user's) creations with others.

A user may wish to share with someone else their child's creation. To do so, one can use application 516 running on computing device 512. In one embodiment, user interface 518 presents an option for the user to take a picture of the child's drawing 520 while at the same time receiving the audio messages 522. Application 516 will associate recordings 522 with the picture of drawing 520.

For example, once the audio files and corresponding photograph(s) are paired with each other, application 516 can be used to share those with others. Application 516 can marry the photograph and recordings into a single file such as an MP4 or other video file. Alternatively, a proprietary format could be utilized that is specific to application 516 such that any recipient who receives the proprietary format need only click on the file to automatically launch application 516, given that it would be paired with the file, such as by way of a unique file extension.

This functionality allows for asynchronous sharing and storing of a child's creations. For example, there are times when recording a video of a user's creation is either not practical or not desired. The audio of such a recording (of a recording) might be low fidelity. Or a user might be in an environment, such as an airport or restaurant, with extensive background noise that makes recording a video unfeasible or impractical.

But at the same time, there is a desire to share a creation with others. For example, say a family is on a trip and a child recently created a fun drawing at an airport. The parents would like to send the audio file(s) recorded along with the image to the child's grandparents. Perhaps the grandparents bought base station 510 as a gift for their grandchild. But because the family is at an airport, or for any other reason, they do not want to record a video that would include image 520 and recordings 522. For example, perhaps they are in a low data environment and do not have access to a high bandwidth connection, or their device is limited on storage. In this way, they can take a photograph of the image and receive the smaller audio files onto their smartphone 512. Now they can send the photograph and corresponding audio files to their parents, the child's grandparents. As mentioned, application 516 can merge the audio recordings with the one or more photographs of drawing 520.

One embodiment of the disclosed technology includes one or more non-transitory computer-storage media comprising computer-executable instructions recorded thereon that, when executed by at least one processor of an electronic device, cause the electronic device to perform a process. The process includes receiving a first indication to store a first live real-time audio segment associated with a first coordinate location that corresponds to a first area of a surface of the electronic device, wherein the first coordinate location is determinable from a first pressure action applied to a flat conductive switch matrix disposed within a body of the electronic device; receiving the first audio segment live and in real time via a component that includes an integrated microphone and speaker; storing the first audio segment along with the first coordinate location such that the first audio segment is retrievable incident to a second pressure action applied at the first coordinate location; and playing the first audio in response to the second pressure action and to a second indication that indicates that the first audio segment should be played.

The first coordinate location that corresponds to the first area of the surface of the electronic device can be associated with a first drawing page.

The first drawing page can be a sheet of paper.

Storing the first audio segment can include associating the first audio with the first drawing page.

Associating the first audio with the first drawing page can occur incident to receiving input from a drawing-identification control of the electronic device.

The drawing-identification control can includes one or more of the following: a button; a plurality of buttons; or a keypad.

The process can also include receiving a second indication to store a second live real-time audio segment associated with a second coordinate location that corresponds to a second area of a surface of the electronic device, wherein the second coordinate location is determinable from a second pressure action applied to a flat conductive switch matrix disposed within a body of the electronic device; receiving the second audio segment live and in real time via a component that includes an integrated microphone and speaker; storing the second audio segment along with the second coordinate location such that the second audio segment is retrievable incident to a third pressure action applied at the second coordinate location; and associating the second audio segment with a second drawing sheet that is identifiable via input from a drawing-identification control of the electronic device.

In another embodiment, one or more non-transitory computer-storage media comprising computer-executable instructions recorded thereon that, when executed by at least one processor of a computing device, cause the computing device to perform a process. The process can include electronically receiving a digital identification of a first photograph of a paper that is associated with an electronics device that includes a paper-receiving area with identifiable location coordinates and wherein at least one sound recording is stored in the electronics device and associated with a first location coordinate; receiving at least one sound recording that is to be associated with the first photograph; associating the at least one sound recording with the first photograph such that the at least one sound recording and the first photograph could be shared with one or more target recipients.

Associating can include generating a movie file that includes the at least one sound recording and the first photograph.

The process can also include sharing the at least one sound recording with the first photograph.

Sharing can include one or more of the following: sending the movie file to the one or more target recipients; or sending a link to the movie to the one or more target recipients.

Many different arrangements of the various components depicted, as well as components not shown, are possible without departing from the scope of the claims below. Embodiments of the disclosed technology have been described with the intent to be illustrative rather than restrictive. Alternative embodiments will become apparent to readers of this disclosure after and because of reading it. Alternative means of implementing the aforementioned can be completed without departing from the scope of the claims below. Certain features and sub-combinations are of utility and may be employed without reference to other features and sub-combinations and are contemplated within the scope of the claims. Although prior patent applications might be incorporated by reference herein, where conflicts or ambiguities might be present, the content of later-filed applications should be read to resolve the conflict or ambiguity or otherwise supersede the earlier content.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. One or more non-transitory computer-storage media comprising computer-executable instructions recorded thereon that, when executed by at least one processor of an electronic device, cause the electronic device to perform a process, the process comprising:
receiving a first indication to store a first live real-time audio segment associated with a first coordinate location that corresponds to a first area of a surface of the electronic device, wherein the first coordinate location is determinable from a first pressure action applied to a flat conductive switch matrix disposed within a body of the electronic device;
receiving the first audio segment live and in real time via a component that includes an integrated microphone and speaker;
storing the first audio segment along with the first coordinate location such that the first audio segment is retrievable incident to a second pressure action applied at the first coordinate location; and
playing the first audio in response to the second pressure action and to a second indication that indicates that the first audio segment should be played.

2. The computer-storage media of claim 1, wherein the first coordinate location that corresponds to the first area of the surface of the electronic device is associated with a first drawing page.

3. The computer-storage media of claim 2, wherein the first drawing page is a sheet of paper.

4. The computer-storage media of claim 2 or 3, wherein storing the first audio segment comprises associating the first audio with the first drawing page.

5. The computer-storage media of claim 4, wherein associating the first audio with the first drawing page occurs incident to receiving input from a drawing-identification control of the electronic device.

6. The computer-storage media of claim 5, wherein the drawing-identification control includes one or more of the following:
a button;
a plurality of buttons; or
a keypad.

7. The computer-storage media of any of claims 2-6, further comprising:
receiving a second indication to store a second live real-time audio segment associated with a second coordinate location that corresponds to a second area of a surface of the electronic device, wherein the second coordinate location is determinable from a second pressure action applied to a flat conductive switch matrix disposed within a body of the electronic device;
receiving the second audio segment live and in real time via a component that includes an integrated microphone and speaker;
storing the second audio segment along with the second coordinate location such that the second audio segment is retrievable incident to a third pressure action applied at the second coordinate location; and
associating the second audio segment with a second drawing sheet that is identifiable via input from a drawing-identification control of the electronic device.

8. One or more non-transitory computer-storage media comprising computer-executable instructions recorded thereon that, when executed by at least one processor of a computing device, cause the computing device to perform a process, the process comprising:
electronically receiving a digital identification of a first photograph of a paper that is associated with an electronics device that includes a paper-receiving area with identifiable location coordinates and wherein at least one sound recording is stored in the electronics device and associated with a first location coordinate;
receiving at least one sound recording that is to be associated with the first photograph; and
associating the at least one sound recording with the first photograph such that the at least one sound recording and the first photograph could be shared with one or more target recipients.

9. The media of claim 8, wherein the associating includes generating a movie file that includes the at least one sound recording and the first photograph.

10. The media of claim 8 or 9, further comprising sharing the at least one sound recording with the first photograph.

11. The media of claim 10, wherein the sharing includes one or more of the following:
sending the movie file to the one or more target recipients; or
sending a link to the movie to the one or more target recipients.

12. An electronic device comprising:
a remote component having a body **characterized by** a first end and an opposite end, wherein the remote component includes a speaker, an ultraviolet (UV) or infrared (IR) light source, a first input control, and a microphone coupled to a memory suitable to store live audio received in real time;
a base unit coupled to the remote component via a connection, wherein the base unit includes a first surface and a detection matrix disposed below the first surface that is adapted to detect a first localized input corresponding to a first coordinate location;
a memory configured to store first live audio that is received in real time via the microphone incident to receiving an indication of the first localized input; and
computer-storage media that embodies a set of computer-executable instructions that facilitate storing the first audio along with its associated first coordinate location and retrieving the first audio incident to receiving a second indication to play the first audio associated with the first coordinate location.

13. The electronic device of claim 12, wherein the detection matrix is a flat conductive switch matrix.

14. The electronic device of claim 13, wherein the switch matrix is a capacitive-sensing interface.

15. The electronic device of claim 14, wherein the capacitive-sensing sensing interface includes a plurality of capacitive pads arranged in grid-like pattern.

16. The electronic device of claim 15, wherein the capacitive-sensing sensing interface detects the first localized input by detecting a disturbance in a field of a first capacitive pad among the plurality of capacitive pads and the location of the first capacitive pad is known.
